# EUROPÄISCHE PATENTANMELDUNG

(11) **EP 2 383 879 A2**
(43) Veröffentlichungstag der Anmeldung: **02.11.2011**
(21) Anmeldenummer: 11003477.4
(22) Anmeldetag: 28.04.2011
(51) Int. Cl.: H02P 5/68, H02P 7/29, F24F 7/00

(54) **Verfahren und Synchronisationseinrichtung zur Synchronisierung von mindestens zwei RWA- und Lüftungsklappenantrieben**

(30) Priorität: 30.04.2010 DE 102010019083
(71) Anmelder: K+G Pneumatik GmbH, 52249 Eschweiler (DE)
(72) Erfinder: Heidrich, Tobias, 36460 Merkers (DE); Möckel, Andreas, Dr., 98704 Langewiesen (DE); Bings, Robert, 52223 Stillberg (DE)
(74) Vertreter: Schubert, Siegmar

(57) **Zusammenfassung**

Bei einem Verfahren zur Synchronregelung von mindestens zwei RWA- und Lüftungsklappenantrieben mit je einem mechanisch kommutierten Gleichstrommotor (1, 2) wird jeder Gleichstrommotor (1, 2) mit je einer pulsweitenmodulierten Spannung gespeist. Mit je einem Stromsensorsignal, aus dem eine Pulsweitenmodulationsfrequenz und deren harmonische Oberwellen ausgefiltert werden, wird jeweils die durch Kommutierung verursachte Welligkeit des Kommutatorstroms jedes der Gleichstrommotore erfasst, die einem Drehwinkel bzw. einer Drehgeschwindigkeit des Gleichstrommotors (1, 2) entspricht. Die pulsweitenmodulierten Spannungen werden an den Gleichstrommotoren (1, 2) in Abhängigkeit von den gefilterten Stromsensorsignalen so moduliert, dass die mindestens zwei RWA- und Lüftungsklappenantriebe durch die Gleichstrommotore (1, 2) synchron verstellt werden.

## Beschreibung

Die Erfindung betrifft ein Verfahren zur Synchronregelung von mindestens zwei RWA- und Lüftungsklappenantrieben mit je einem mechanisch kommutierten Gleichstrommotor.

Ein weiterer Aspekt der Erfindung betrifft eine entsprechende Synchronisationseinrichtung zur Synchronregelung von mindestens zwei RWA- und Lüftungsklappenantrieben mit je einem mechanisch kommutierten Gleichstrommotor.

In RWA- und Lüftungsklappeneinbauten, bei denen jeweils eine RWA- oder Lüftungsklappe mit zwei oder mehr RWA- oder Lüftungsklappenantrieben betätigt wird, ist es wünschenswert, die RWA- und Lüftungsklappenantriebe synchron zu fahren, um die RWA- und Lüftungsklappe zuverlässig und verwindungsfrei zu öffnen oder zu schließen. Dies soll auch dann erreicht werden, wenn die RWA- oder Lüftungsklappe ungleichmäßig, z.B. durch eine Schneelast, belastet ist.

Zur Synchronisation der RWA- und Lüftungsklappenbewegung und damit gleichen Positionierung der Angriffsstellen der RWA- und Lüftungsklappenantriebe an jeweils einer RWA- und Lüftungsklappe, die sie betätigen, können diese RWA- und Lüftungsklappenantriebe miteinander mechanisch starr gekuppelt werden. Dies erhöht jedoch den Installationsaufwand und ist aus räumlichen Gründen nicht immer möglich.

Stattdessen könnte eine einheitliche Verstellung von RWA- und Lüftungsklappenantrieben, die an jeweils einer RWA- bzw. Lüftungsklappe angreifen, durch eine Gleichlauf- oder Synchronisationsregelung erreicht werden, zu der jeweils ein RWA- und Lüftungsklappenantrieb mit je einem Drehwinkelsensor mechanisch gekuppelt wird, der den Drehwinkel bzw. die Drehwinkeländerung des RWA- bzw. Lüftungsklappenantriebs insoweit direkt erfasst und ein entsprechendes elektrisches Signal abgibt, aus dem ein Istwert der Stellung bzw. Stellgeschwindigkeit des RWA- bzw. Lüftungsklappenantriebs erzeugt werden kann. Abhängig von den Istwerten der Stellung bzw. Stellgeschwindigkeit der RWA- bzw. Lüftungsklappenantriebe, die an einer RWA- und Lüftungsklappe angreifen, kann die synchrone Verstellung und gleichmäßige Positionierung geregelt werden. Jedoch bedingt die mechanische Kupplung solcher Drehwinkelsensoren an den RWA- und Lüftungsklappenantrieben einen erheblichen Aufwand und ist nicht immer durchführbar, wenn die RWA- und Lüftungsklappenantriebe nachträglich mit solchen Drehwinkelsensoren ausgerüstet werden sollen.

Der vorliegenden Erfindung liegt die Aufgabe zugrunde, ein Verfahren zur Synchronregelung von mindestens zwei RWA- und Lüftungsklappenantrieben vorzuschlagen, mit dem die Synchronregelung mit geringerem Installationsaufwand durchgeführt werden kann. Insbesondere soll das Verfahren einfach an bestehenden RWA- und Lüftungsklappenantrieben realisierbar sein, ohne mechanische oder elektrische Änderungen an den RWA- und Lüftungsklappenantrieben selbst zu erfordern.

Unter einem weiteren Aspekt der Erfindung soll eine Synchronisationseinrichtung vorgeschlagen werden, mit der dieses Verfahren in unkomplizierter Weise durchführbar ist.

Das erfindungsgemäße Verfahren zur Synchronregelung von mindestens zwei RWA- und Lüftungsklappenantrieben geht von solchen Antrieben mit je einem mechanisch kommutierten Gleichstrommotor aus, von dem allgemein bekannt ist, dass der durch Kommutierung des Stroms, der die Motorwicklungen durchströmt, entstehende Wechselanteil des Stromes, der auch als Welligkeit oder "ripple" bezeichnet wird, erfasst und ausgewertet werden kann, um die der Frequenz der Welligkeit proportionale Drehzahl und/oder den Drehwinkel zu ermitteln (DE 197 29 238 C1, DE 101 10 265 C2).

In diesem Zusammenhang ist auch eine Schaltungsanordnung zur Ermittlung der Frequenz einer durch Störspannungen überlagerten periodischen Spannung bekannt, welche die durch den Kommutator eines Kommutatormotors erzeugte Welligkeit einer an dem Kommutatormotor anliegenden Spannung ist (DE 101 10 265 C2). Hierzu weist die Schaltungsanordnung an einem Anschluss des Motors eine Wechselspannungskopplung mit einem Kondensator zur Entfernung des Gleichstromanteils der Spannung auf, der somit Hochpasseigenschaften hat, sowie ein Tiefpassfilter, der der Wechselspannungskopplung vorgeschaltet ist und mindestens einen zweiten Kondensator und einen Widerstand umfasst. Der Wechselspannungskopplung nachgeschaltet ist ein Komparator, dem der Wechselspannungsanteil der Spannung über einen ersten Eingangsanschluss und dazu phasenversetzt über einen zweiten Eingangsanschluss zugeführt wird. Mit einem Ausgangsanschluss des Komparators sind Mittel zum Auswerten der Frequenz des Ausgangssignals an dem Ausgangsanschluss verbunden. Durch den oben erwähnten Tiefpassfilter sollen Störungen aus der Spannung des Kommutatormotors ausgefiltert werden. Durch die Wechselspannungskopplung wird der Gleichspannungsanteil der Spannung herausgefiltert, so dass nur noch der Wechselspannungsanteil in dem Komparator verarbeitet wird, dem der Wechselspannungsanteil an einem Eingangsanschluss nicht phasenversetzt und an dem anderen Eingangsanschluss phasenversetzt zugeführt wird, um mit dem Komparator ein rechteckförmiges Ausgangssignal zu erzeugen, dessen Frequenz mit der Frequenz der Welligkeit übereinstimmt und durch einen Mikrokontroller weiter ausgewertet werden kann. In einer ersten Ausführungsform der Schaltungsanordnung wird die Frequenz der Welligkeit im Generatorbetrieb des Kommutatormotors ermittelt, wodurch keine Störungen durch die im Motorbetrieb an dem Kommutatormotor anliegende Spannung verursacht werden können. Es ist aber auch möglich, die auszuwertende Spannung im Motorbetrieb an einem dem Kommutatormotor vorgeschalteten Meßwiderstand abzugreifen.

Um die Drehgeschwindigkeit eines Gleichstrommotors zu überwachen und zu regeln, ist es weiterhin bekannt, an einem Anschluss eines Gleichstrommotors ein elektrisches Signal auszukoppeln, welches mit einem Hochpass gefiltert wird, um eine Wechselspannungskomponente des Signals zu erfassen (EP 0 730 156 A1 ). Dem hierzu vorgesehenen Hochpassfilter kann ein Tiefpass vorgeschaltet sein, mit dem hochfrequente Störungen vermindert werden sollen. Das gefilterte Signal wird in einen Vergleicher eingespeist, der ein Rechtecksignal bildet, welches in einem Mikroprozessor weiter ausgewertet werden kann, insbesondere mit einer Sollfrequenz verglichen wird, um insbesondere ein Überschreiten eines oberen Grenzwerts oder Unterschreiten eines unteren Grenzwerts der Motordrehzahl zu überwachen. Der Mikroprozessor kann auch mittels eines pulsweitenmodulierten Signals, welches er aus dem gefilterten Signal erzeugt, über einen Digital-Analog-Wandler und einen Transistor die Motordrehzahl regeln. Zur Funktion dieser Regelung ist also eine Digital-Analog-Umsetzung erforderlich, die den Aufwand für diese Regelung erhöht.

Mit der erfindungsgemäßen Lösung der weiter oben angegebenen Aufgabe wird gemäß Anspruch 1 ein Verfahren zur Synchronregelung von mindestens zwei RWA- und Lüftungsklappenantrieben mit je einem mechanisch kommutierten Gleichstrommotor vorgeschlagen, welches zur Speisung der Gleichstrommotore mit jeweils einer geregelten pulsweitenmodulierten Spannung ohne Digital-Analog-Umsetzung und erforderlichenfalls Verstärkung der analogen Gleichspannung auskommt und gleichwohl eine zur genauen Synchronregelung der RWA- und Lüftungsklappenantriebe technisch wenig aufwendige Auswertung der jeweils durch Kommutierung der Kommutatorstroms, d.h. Motorstroms verursachten Welligkeit ohne Störung durch die Pulsweitenmodulation der jeweils an dem Gleichstrommotor anliegenden Spannung gestattet.

Die der Erfindung zugrundeliegende Aufgabe wird durch ein Verfahren mit den in Anspruch 1 angegebenen Schritten gelöst.

Somit wird zur Synchronregelung der mindestens zwei RWA- und Lüftungsklappenantriebe mit je einem mechanisch kommutierten Gleichstrommotor jeder Gleichstrommotor mit einer pulsweitenmodulierten Spannung beaufschlagt, wobei die pulsweitenmodulierten Spannungen an den Gleichstrommotoren so moduliert, d.h. gesteuert, werden, dass mindestens zwei RWA- und Lüftungsklappenantriebe, die an einer RWA- und Lüftungsklappe angreifen, durch die Gleichstrommotore synchron verstellt werden. Durch die Pulsweitenmodulation der Spannungen kann deren Effektivwert verlustarm und mit entsprechend schwach dimensionierten Schaltgliedern gesteuert werden. Die Steuerung bzw. Modulation der pulsweitenmodulierten Spannungen erfolgt abhängig von Istwerten des Drehwinkels der Gleichstrommotore aus der durch Kommutierung verursachten Welligkeit des jeweiligen Kommutatorstroms bzw. Motorstroms jedes der Gleichstrommotore ausgehend von einem Stromsensorsignal, zu dessen Erzeugung der jeweilige Stromsensor nicht mit dem RWA- und Lüftungsklappenantrieb mechanisch verbunden ist, sondern mit dem Motorstromkreis, vorzugsweise galvanisch getrennt, gekoppelt ist. Zu einer solchen Kopplung statt einer galvanischen Kopplung mit einem in den Motorstromkreis eingeschleiften Messwiderstand, an dem eine dem Motorstrom proportionale Messspannung abgegriffen werden kann, eignet sich besonders eine magnetische Kopplung mittels Rogowskispule, mit dem in vorteilhafter Weise nur der Wechselanteil des Motorstroms erfasst wird, oder auch mittels eines Pearsonwandlers, wenn Sättigungserscheinungen in dessen ferromagnetischem Kern vermieden werden.

Wesentlich ist, dass aus dem mit dem Stromsensor erzeugten Stromsensorsignal die Pulsweitenmodulationsfrequenz und deren harmonische Oberwellen ausgefiltert werden, um im Wesentlichen nur die durch Kommutierung verursachte Welligkeit des Kommutatorstroms bzw. Motorstroms zu erfassen.

Hierzu ist vorzugsweise gemäß Anspruch 3 die Pulsweitenmodulationsfrequenz höher als die maximale zu erfassende Welligkeit des Kommutatorstroms eingestellt, die jeweils aus dem Stromsensorsignal durch Tiefpassfilterung ausgefiltert wird.

Dieser Tiefpass kann einfach ein passiver Tiefpass sein, insbesondere wenn in vorteilhafter Weise gemäß Anspruch 6 eine zusätzliche Tiefpassfilterung zur relativen Erhöhung des Anteils des erfassten Stromsensorsignals, der durch Kommutierung verursacht ist und in einem Frequenzbereich zwischen 300 Hz und 1200 Hz liegt, vorgesehen ist. Zu der zusätzlichen Tiefpassfilterung wird vorzugsweise ein aktiver Tiefpass zweiter Ordnung verwendet.

Das erfindungsgemäße Verfahren nach Anspruch 1 wird grundsätzlich dadurch vollendet, dass mit dem gefilterten Stromsensorsignal, mit dem die durch Kommutierung verursachte Welligkeit jeweils eines Kommutatorstroms bzw. Motorstroms weitgehend ungestört erfasst wird, so dass die erfasste Welligkeit einen Drehwinkel bzw. einer Drehgeschwindigkeit des Gleichstrommotors entspricht, die pulsweitenmodulierte Spannung an jedem der Gleichstrommotore erzeugt bzw. gesteuert wird. Die mit dem gefilterten Stromsensorsignal erfasste Welligkeit des Kommutatorstroms entspricht somit einem Istwert des Drehwinkels bzw. einer Drehgeschwindigkeit des Gleichstrommotors bzw. des zugehörigen RWA- und Lüftungsklappenantriebs, der zu der Steuerung der pulsweitenmodulierten Spannung, mit der jeweils der Gleichstrommotor eines der Lüftungsklappenantriebe beaufschlagt wird, mit einem Sollwert verglichen wird. Zur Synchronregelung von mindestens zwei RWA- und Lüftungsklappenantrieben kann der Istwert der Drehgeschwindigkeit des einen Gleichstrommotors als Sollwert bzw. Führungsgröße zur Steuerung der pulsweitenmodulierten Spannung des Gleichstrommotors des wenigstens zweiten RWA- und Lüftungsklappenantriebs verwendet werden.

Zu der weitgehend ungestörten Erfassung der durch Kommutierung verursachten Welligkeit jeweils eines Kommutatorstroms bzw. Motorstroms wird bei der Übertragung des Stromsensorsignals wird gemäß Anspruch 4 vor der oben erörterten Tiefpassfilterung durch Hochpassfilterung ein Gleichstromanteil aus dem Stromsensorsignal insbesondere in dem Fall ausgefiltert, in dem der Stromsensor einen Gleichstromanteil bildet bzw. von dem Motorstrom überträgt.

In dem Fall, in dem zur Ausübung des Verfahrens eine Gleichspannungsversorgung aus dem Stromnetz verwendet wird und somit die Gleichspannung der Spannungsversorgung oder ein Steuersignal einen 100-Hz-Anteil aufweist, wird gemäß Anspruch 5 eine zusätzliche Hochpassfilterung durchgeführt, die der Tiefpassfilterung folgt und gegebenenfalls der zusätzlichen Tiefpassfilterung vorangeht, wobei der 100-Hz-Anteil aus dem Stromsensorsignal ausgefiltert wird.

Bevor mit dem somit vollständig gefilterten Stromsensorsignal des Gleichstrommotors jeweils eines der RWA- und Lüftungsklappenantriebe die pulsweisenmodulierte Spannung zur Speisung des RWA- und Lüftungsklappenantriebs moduliert wird, wird besonders vorteilhaft gemäß Anspruch 2 das gefilterte Stromsensorsignal in ein Rechteckimpulssignal umgesetzt, so dass die Anzahl Rechteckimpulse proportional dem mit dem Sensorsignal erfassten Drehwinkel ist. Mit den Rechteckimpulssignalen der Gleichstrommotore der RWA- und Lüftungsklappenantriebe wird dann ein digitaler Regler, vorzugsweise in Form eines Mikrokontrollers, an den mindestens eine Auswerteschaltung angebunden ist, angesteuert. Hierzu genügt ein kleiner Mikrokontroller, weil das Rechteckimpulssignal, welches einfach mit einem Komparator gebildet werden kann, eine verhältnismäßig niedrige Frequenz von wenigen kHz aufweist.

Die pulsmodulierten Spannungen an den Gleichstrommotoren, die gemäß Anspruch 1 in Abhängigkeit von den gefilterten Stromsensorsignalen so moduliert werden, dass die mindestens zwei RWA- und Lüftungsklappenantriebe durch die Gleichstrommotore synchron verstellt werden, können gemäß Anspruch 7 zusätzlich in Abhängigkeit von einem Hubgrenzwert moduliert bzw. gesteuert werden, so dass eine Begrenzung des Hubs der RWA- und Lüftungsantriebe erfolgt.

Weiterhin können gemäß Anspruch 8 die pulsweitenmodulierten Spannungen an den Gleichstrommotoren, die gemäß Anspruch 1 moduliert werden, in Abhängigkeit von einem Positionssollwert moduliert bzw. gesteuert werden, so dass die RWA- und Lüftungsklappenantriebe in eine voreingestellte Sollposition gefahren werden.

Auch ist es gemäß Anspruch 9 möglich, die gemäß Anspruch 1 erzeugten pulsweitenmodulierten Spannungen an den Gleichstrommotoren in Abhängigkeit von einem vorgegebenen Stellgeschwindigkeitssollwert und den gefilterten Stromsignalen, aus denen Positionsänderungen der RWA- und Lüftungsklappenantriebe als Stellgeschwindigkeitsistwerte abgeleitet werden, zu modulieren bzw. steuern, so dass die RWA- und Lüftungsklappenantriebe mit dem Stellgeschwindigkeitssollwert verstellt werden.

Eine zur Durchführung des erfindungsgemäßen Verfahrens geeignete Synchronisationseinrichtung weist die in Anspruch 10 angegebenen Merkmale auf. Die Merkmale dieser Synchronisationseinrichtung und deren Weiterbildungen gemäß den Ansprüchen 11 - 20 wurden teilweise oben in Verbindung mit dem erfindungsgemäßen Verfahren und dessen Ausgestaltungen erörtert.

Somit ist zur Erfassung der durch Kommutierung verursachten Welligkeit des Kommutatorstroms mit einem jeweils einem der Gleichstrommotore zugeordneten Stromsensoren wesentlich, dass Störungen der durch Kommutierung verursachten Welligkeit, insbesondere durch die Pulsweitenmodulation der Spannung, mit dem die Gleichstrommotore der synchron geregelten RWA- und Lüftungsklappenantriebe beaufschlagt werden, durch die Filteranordnung mit mindestens einem Tiefpass, wirksam ausgefiltert werden. An dem Ausgang der Filteranordnung soll somit nur die durch Kommutierung verursachte Welligkeit des Kommutatorstroms auftreten, die einem Drehwinkel bzw. einer Drehgeschwindigkeit des Gleichstrommotors sowie der Position des RWA- und Lüftungsklappenantriebs, zu dem der Gleichstrommotor gehört, entspricht. Hierzu ist die Pulsweitenmodulationsfrequenz des Synchronisationsreglers, der die pulsweitenmodulierten Spannungen an den Gleichstrommotoren regelt, bzw. der bei der Regelung auftretende Pulsweitenmodulationsfrequenzbereich höher, und zwar wesentlich höher gewählt als die maximale Frequenz der durch Kommutierung entstehenden Welligkeit des Kommutatorstroms bzw. der Nutfrequenz des verwendeten Gleichstrommotors. Diese Bedingung ist somit auch für die harmonischen Oberschwingungen der Pulsweitenmodulationsfrequenz erfüllt. Zur wirksamen Filterung der unerwünschten hochfrequenten Signalanteile des mit dem Stromsensor erfassten Stroms ist eine Grenzfrequenz des mindestens einen Tiefpasses der Filteranordnung niedriger als die Modulationsfrequenz des Synchronisationsreglers eingestellt, so dass die Pulsmodulationsfrequenz und deren harmonische Oberschwingungen ausgefiltert werden. Hierzu ist der Tiefpass vorzugsweise als Tiefpass zweiter Ordnung vom Besseltyp ausgebildet.

Weiterhin besonders vorteilhaft ist der Tiefpass der Filteranordnung mit einem zusätzlichen Tiefpass nach Anspruch 14 ergänzt, der zweckmäßig ebenfalls als Tiefpass zweiter Ordnung vom Besseltyp ausgebildet ist, der den Signalanteil des Stromsensorsignals, der durch Kommutierung verursacht ist, relativ zu störenden Stromsensorsignalanteilen erhöht.

Damit gelingt es, den störenden Einfluss der Pulsweitenmodulation auf die Erfassung des Drehwinkels bzw. der dem Drehwinkel entsprechenden Position des RWA- und Lüftungsantriebs und/oder der Drehgeschwindigkeit des Gleichstrommotors bzw. der Stellgeschwindigkeit des RWA- und Lüftungsantriebs zu eliminieren.

Für den üblichen Fall, dass die Betriebsspannung und/oder das Steuersignal bzw. Sollwertsignal, welches in die Synchronisationseinrichtung eingespeist wird, durch Gleichrichtung eines Netzwechselstroms gewonnen wird bzw. durch die Netzfrequenz beeinflusst wird, ist ein zusätzlicher Hochpass gemäß Anspruch 13 dem Tiefpass in der Filteranordnung nachgeschaltet, also zwischen dem Tiefpass und dem zusätzlichen Tiefpass angeordnet. Der zusätzliche Hochpass filtert aus dem übertragenen Stromsensorsignal insbesondere den Frequenzanteil von 100 Hz aus. Der Hochpass ist vorteilhaft ein Hochpass zweiter Ordnung vom Besseltyp.

Die voranstehende Bezeichnung "zusätzlicher Hochpass" bezieht sich darauf, dass nach Anspruch 12 ein Hochpass am Eingang der Filteranordnung angeordnet ist, der zum Auskoppeln nur des Wechselanteils des von jeweils einem Stromsensor bereitgestellten Stromsensorsignals bzw. zum Ausfiltern eines Gleichstromanteils aus dem Stromsensorsignal dient. Diese Auskoppelung ist insbesondere für dem Fall vorgesehen, dass dem Kommutatorstromkreis des geregelten Gleichstrommotors ein Stromsensor zugeordnet ist, der ein Sensorsignal mit einem Gleichspannungsanteil erzeugt.

Wenn nach Anspruch 15 der Tiefpass, mit dem die Pulsweitenmodulationsfrequenz ausgefiltert wird, der zusätzliche Tiefpass, mit dem der Anteil des Stromsensorsignals, der durch Kommutierung verursacht ist, relativ erhöht wird, und der zusätzliche Hochpass, mit dem ein Frequenzanteil von 100 Hz ausgefiltert wird, aktiv, d.h. verstärkend, ausgebildet sind, ist die Signalqualität des am Ausgang der Filteranordnung anstehenden gefilterten Stromsensorsignals erhöht und die weitere Signalverarbeitung insbesondere in einem Komparator erleichtert.

Der Ausgang der Filteranordnung ist besonders vorteilhaft nach Anspruch 11 mit einem Eingang des Komparators verbunden, der das von der Filteranordnung abgegebene gefilterte Stromsensorsignal in ein Rechteckimpulssignal umsetzt, welches dem Drehwinkel bzw. der Drehgeschwindigkeit des Gleichstrommotors, der zu dem geregelten RWA- und Lüftungsklappenantrieb gehört, entspricht.

Der Ausgang des Komparators ist nach Anspruch 19 vorzugsweise mit einem Eingang eines Mikrokontrollers mit einer Auswerteschaltung verbunden, welche die in dem Mikrokontroller zahlenmäßig erfassten Positionen der Stellantriebe ausgewertet. Hierzu ist wegen des vorgeschalteten Komparators, der ein digitales Signal mit einer Frequenz von wenigen kHz erzeugt, ein verhältnismäßig kleiner Mikrokontroller ausreichend. Eine an den Mikrokontroller angebundene Schaltung dient der Synchronregelung der Gleichstrommotore, die zu den RWA- und Lüftungsklappenantrieben gehören. In dem vorliegenden Anmeldungstext wird der Mikrokontroller mit der obigen angebundenen Schaltung auch insgesamt als Synchronisationsregler angesehen, in dem jeweils einer der mindestens zwei Eingänge des Mikrokontrollers, der jeweils mit einem Ausgang des Komparators bzw. der Filteranordnung verbunden ist, einen der beiden Istwerteingänge des Synchronisationsreglers darstellt, der zwei Gleichstrommotore synchronisiert.

Mindestens ein zusätzlicher Eingang des Mikrokontrollers kann als Steuereingang zum Beispiel für Heben oder Senken einer RWA- und Lüftungsklappe bzw. Sollwerteingang des Synchronisationsreglers vorgesehen sein. Über einen solchen Eingang kann der Mikrokontroller bzw. Synchronisationsregler auch mit einer Einstellmöglichkeit eines Positionssollwerts oder eines Stellgeschwindigkeitssollwerts ausgebildet sein, wobei der Synchronisationsregler zur Positionierung bzw. Stellgeschwindigkeitsregelung entsprechend auszubilden ist.

Nach Anspruch 17 können weitere Eingänge des Mikrokontrollers mit jeweils einem Endlagenschalter oder ―sensor zur Hubbegrenzung der RWA- und Lüftungsklappenantriebe verbunden sein.

Nach Anspruch 18 kann der Synchronisationsregler bzw. der Mikroprozessor mit der an ihm angebundenen Schaltung einen Stellgeschwindigkeitsregler umfassen, mit dem die Stellgeschwindigkeit der RWA- und Lüftungsantriebe bei deren Synchronisation geregelt wird.

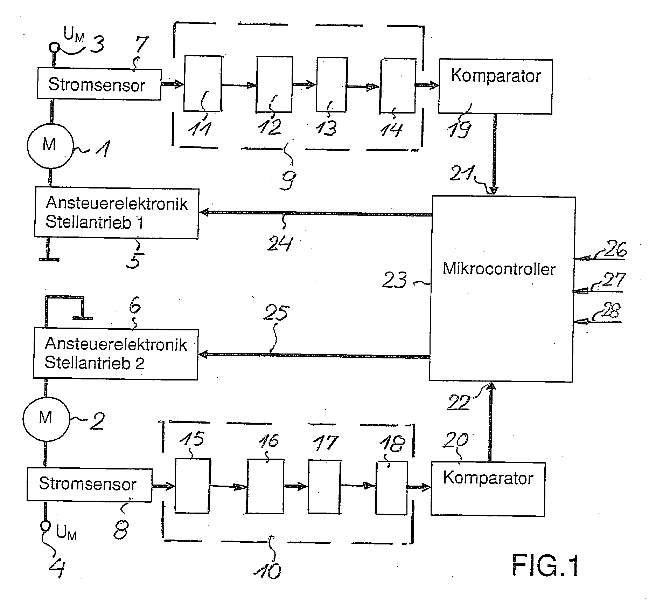

Ein Ausführungsbeispiel der erfindungsgemäßen Synchronisationseinrichtung, mit dem das erfindungsgemäße Synchronisationsverfahren ausgeführt werden kann wird im Folgenden anhand einer Zeichnung mit einer Figur erläutert. Hierzu zeigt
- Figur 1: ein vereinfachtes Blockschaltbild der Synchronisationseinrichtung zur Synchronregelung von zwei RWA- und Lüftungsklappenantrieben.

Gemäß Figur 1 gehört zu jeweils einem von zwei RWA- und Lüftungsklappenantrieben, deren Gleichlaufdrehwinkelsynchron synchronisiert werden sollen, ein mechanisch kommutierter Gleichstrommotor 1 bzw. 2, der aus einer Motorspannungsquelle UM an einer Klemme 3 bzw. 4 über eine Ansteuerelektronik 5 bzw. 6 mit einer pulsweitenmodulierten Motorspannung beaufschlagt werden kann.

Um hierzu für jeden der beiden RWA- und Lüftungsklappenantriebe ein dem Drehwinkel des Gleichstrommotors 1 bzw. 2 entsprechendes Signal des von dem Gleichstrommotors 1 bzw. 2 zurückgelegten Drehwinkels zu erzeugen, ist an jedem nicht bezeichneten Motorstromkreis ein Stromsensor 7 bzw. 8 angeordnet, der als Stromwandler ausgebildet ist. Der Stromsensor 7 bzw. 8 trennt somit den zugehörigen Motorstromkreis, in dem der Motor 1 bzw. 2 angeordnet ist, von einer sich an die Stromsensoren 7 bzw. 8 in Pfeilrichtung anschließenden Schaltungsanordnung zur Verarbeitung des jeweils mit dem Stromsensor 7 bzw. 8 gebildeten Stromsensorsignals, welches dem jeweiligen Motorstrom proportional ist.

An jeden der Stromsensoren 7 bzw. 8 schließt sich in Signalflussrichtung die durch jeweils einen Pfeil gekennzeichnet ist, eine Filteranordnung 9 bzw. 10 an, mit der trotz der Pulsweitenmodulation des Motorstroms aus dem von dem Stromsensor 7 bzw. 8 abgegebenen Stromsensorsignal ein gefiltertes Stromsensorsignal ausgefiltert wird, das im Wesentlichen nur der durch die Kommutierung des Motorstroms erzeugten Welligkeit entspricht und nicht durch andere Einflüsse, insbesondere durch die Pulsweitenmodulation des Motorstroms, gestört ist.

Im einzelnen umfasst die Filteranordnung 9 an dem Ausgang des Stromsensors 7 einen passiven Hochpass 11 und weiter in Signalflussrichtung bzw. Pfeilrichtung einen aktiven Tiefpass 12, einen zusätzlichen Hochpass 13 und einen zusätzlichen Tiefpass 14.

Dementsprechend umfasst die Filteranordnung 10 an dem Stromsensor 8 einen passiven Hochpass 15, einen Tiefpass 16, einen zusätzlichen Hochpass 17 und einen zusätzlichen Tiefpass 18.

Der passive Hochpass 11 bzw. 15 sichert eine Entkopplung eines Gleichstromanteils im Motorstrom aus dem Stromsensorsignal. Der nachfolgende Tiefpass 12 bzw. 16 ist als aktiver, verstärkender Tiefpass vorzugsweise 2. Ordnung mit Bessel-Charakteristik mit einer Grenzfrequenz ausgebildet, die unterhalb der maximal auftretenden Nutfrequenz des Gleichstrommotors 1 bzw. 2 ist, um insbesondere die Pulsweitenmodulationsfrequenz eines zu der Synchronisationseinrichtung gehörenden Synchronisationsreglers wirkungsvoll auszufiltern, und damit auch die höheren Schwingungsanteile bzw. Harmonischen der Pulsweitenmodulationsfrequenz.

Zu dieser Dimensionierung des Tiefpasses gehört, dass die Pulsweitenmodulationsfrequenz des Synchronisationsreglers, der Bestandteil der Synchronisationseinrichtung ist, wesentlich höher als die maximale zu erfassende Welligkeit des Motorstroms des Gleichstrommotors 1 bzw. 2 dimensioniert ist.

Für den üblichen Fall, in dem durch Gleichrichtung eines Steuersignals bzw. Sollwertsignals des Synchronisationsreglers oder in einer Stromversorgung der Synchronisationseinrichtung, die mit einer Gleichrichtung eines Netzstroms verbunden ist, in dem Motorstrom ein Frequenzanteil von 100 Hz auftritt, schließt sich jeweils an den Tiefpass 12 bzw. 16 ein zusätzlicher Hochpass 13 bzw. 17 an, mit dem der Frequenzanteil um 100 Hz und tiefer ausgefiltert wird, der sonst die Erfassung der durch Kommutierung verursachten Welligkeit des jeweiligen Kommutatorstroms stören würde.

Schließlich folgt in der Filteranordnung 9 bzw. 10 auf den zusätzlichen Hochpass 13 bzw. 17 ein zusätzlicher Tiefpass 14 bzw. 18, der je nach verwendetem Gleichstrommotor 1 bzw. 2 in dem Bereich von 300 Hz bis 1000 Hz den zu übertragenden, durch Kommutierung verursachten Signalanteil in dem jeweils gefilterten Stromsensorsignal anhebt.

Jeweils auf die dem Stromsensor 7 bzw. 8 zugeordnete Filteranordnung 9 bzw. 10 folgt ein Komparator 19 bzw. 20, mit dem das gefilterte Stromsensorsignal, welches im Wesentlichen durch die durch Kommutierung verursachte Welligkeit des Kommutatorstroms bzw. Motorstroms verursacht ist, in ein Recheckimpulssignal umgesetzt wird, so dass eine Anzahl Rechteckimpulse proportional dem Drehwinkel des Motors 1 bzw. 2 ausgezählt werden kann. Hierzu ist der Ausgang des Komparators 19 bzw. 20, an dem das Rechteckimpulssignal ansteht, mit je einem Eingang 21 bzw. 22 eines Mikrokontrollers 23 verbunden. An den Mikrokontroller sind Auswerteschaltungen angebunden, die in der Zeichnung nicht dargestellt sind. Mit jeweils einer dieser Auswerteschaltungen werden die Rechteckimpulse des Rechteckimpulssignals, die einem von dem Gleichstrommotor 1 bzw. 2 zurückgelegten Drehwinkel entsprechen, ausgezählt und bilden somit ein Istwertsignal der Position des RWA- und Lüftungsklappenantriebs bzw. dessen Gleichstrommotors 1 bzw. 2.

Weitere der oben erwähnten, an den Mikrokontroller angebundene Schaltungen können den Synchronisationsregler bilden, der jeweils über die Leitung 24 bzw. 25 und die Ansteuerelektronik 5 bzw. 6 die Motorspannung pulsweitenmoduliert steuert, so dass die Gleichstrommotoren 1 und 2 gleiche Drehwinkel im Wesentlichen gleichzeitig zurücklegen. Somit wird ein Gleichlauf der RWA- und Lüftungsklappenantriebe erzielt. Zur Steuerung des Gleichlaufs kann ein Steuersignal insbesondere für Heben und Senken einer RWA- und Lüftungsklappe, die durch die Gleichstrommotoren 1 und 2 verstellt wird, in einen Steuereingang 26 des Mikrokontrollers eingespeist werden.

Mit weiteren Eingängen 27, 28, die mit in Figur 1 nicht dargestellten Endlagenschaltern bzw. Sensoren verbunden sind, kann so in den Mikrokontroller bzw. Synchronisationsregler eingegriffen werden, dass eine Hubbegrenzung der RWA- und Lüftungsklappenantriebe erfolgt.

Ein Vorteil der Synchronisationseinrichtung gemäß Figur 1 besteht darin, dass diese an bereits bestehenden RWA- und Lüftungsklappenantrieben ergänzend angeordnet werden kann, ohne mechanische oder elektrische Umrüstungen an den RWA- und Lüftungsantrieben zu erfordern.

Durch Abwandlung der Synchronisationseinrichtung kann mit dieser außer dem Gleichlauf auch eine Parallelabschaltfunktion realisiert werden, die beide RWA-und Lüftungsklappenantriebe stoppt, wenn eine Überlastschalteinrichtung jeweils eines der RWA- und Lüftungsklappenantriebe einer RWA- und Lüftungsklappe anspricht.

### Bezugszeichenliste

- 1: Gleichstrommotor
- 2: Gleichstrommotor
- 3: Klemme
- 4: Klemme
- 5: Aussteuerelektronik
- 6: Aussteuerelektronik
- 7: Stromsensor
- 8: Stromsensor
- 9: Filteranordnung
- 10: Filteranordnung
- 11: passiver Hochpass
- 12: Tiefpass
- 13: zusätzlicher Hochpass
- 14: zusätzlicher Tiefpass
- 15: passiver Hochpass
- 16: Tiefpass
- 17: zusätzlicher Hochpass
- 18: zusätzlicher Tiefpass
- 19: Komparator
- 20: Komparator
- 21: Eingang
- 22: Eingang
- 23: Mikrokontroller
- 24: Leitung
- 25: Leitung
- 26: Steuereingang
- 27: Eingang Hubbegrenzung
- 28: Eingang Hubbegrenzung

## Patentansprüche

1. Verfahren zur Synchronregelung von mindestens zwei RWA- und Lüftungsklappenantrieben mit je einem mechanisch kommutierten Gleichstrommotor (1, 2),
wobei jeder Gleichstrommotor (1, 2) mit je einer pulsweitenmodulierten Spannung gespeist wird,
wobei jeweils eine durch Kommutierung verursachte Welligkeit eines Kommutatorstroms jedes der Gleichstrommotore mit je einem Stromsensorsignal, aus dem eine Pulsweitenmodulationsfrequenz und deren harmonische Oberwellen ausgefiltert werden, erfasst wird, so dass die erfasste Welligkeit einem Drehwinkel bzw. einer Drehgeschwindigkeit des Gleichstrommotors (1, 2) entspricht, und
wobei die pulsweitenmodulierten Spannungen an den Gleichstrommotoren (1, 2) in Abhängigkeit von den gefilterten Stromsensorsignalen so moduliert werden, dass die mindestens zwei RWA- und Lüftungsklappenantriebe durch die Gleichstrommotore (1, 2) synchron verstellt werden.

2. Verfahren nach Anspruch 1,
**dadurch gekennzeichnet,**
**dass** jeweils das gefilterte Stromsensorsignal eines der Gleichstrommotore (1, 2) in ein Rechteckimpulssignal umgesetzt wird, so dass die Anzahl Rechteckimpulse proportional dem Drehwinkel ist, und
**dass** mit den Rechteckimpulssignalen der Gleichstrommotore (1, 2) ein digitaler Regler (23) angesteuert wird, der die pulsweitenmodulierten Spannungen an den Gleichstrommotoren (1, 2) moduliert.

3. Verfahren nach Anspruch 1 oder 2,
**dadurch gekennzeichnet,**
**dass** eine Pulsweitenmodulationsfrequenz höher als die maximale zu erfassende Welligkeit des Kommutatorstroms eingestellt ist und jeweils aus dem Stromsensorsignal durch Tiefpassfilterung (12, 16) ausgefiltert wird.

4. Verfahren nach Anspruch 3,
**dadurch gekennzeichnet,**
**dass** jeweils durch eine der Tiefpassfilterung (12, 16) vorangehende Hochpassfilterung (11, 15) ein Gleichstromanteil aus dem Stromsensorsignal ausgefiltert wird.

5. Verfahren nach Anspruch 3 oder 4,
**dadurch gekennzeichnet,**
**dass** jeweils durch zusätzliche Hochpassfilterung (13, 17), die der Tiefpassfilterung (12, 16) folgt, ein Frequenzanteil insbesondere von 100 Hz, der auf Gleichrichtung eines Steuersignals (Sollwertsignals) zur Synchronregelung oder Gleichrichtung in einer zur Ausübung des Verfahrens vorgesehenen Stromversorgung zurückgeht, aus dem Stromsensorsignal ausgefiltert wird.

6. Verfahren nach einem der Ansprüche 3 ― 5,
**gekennzeichnet durch**
zusätzliche Tiefpassfilterung (14, 18) zur relativen Erhöhung des Anteils des erfassten Stromsensorsignals, der **durch** Kommutierung verursacht ist und in einem Frequenzbereich zwischen 300 Hz und 1200 Hz liegt.

7. Verfahren nach einem der vorangehenden Ansprüche,
**dadurch gekennzeichnet,**
**dass** die pulsweitenmodulierten Spannungen an den Gleichstrommotoren in Abhängigkeit von einem Hubgrenzwert und den gefilterten Stromsensorsignalen so moduliert werden, dass eine Hubbegrenzung des Hubs der RWA- und Lüftungsklappenantriebe erfolgt.

8. Verfahren nach einem der Ansprüche 1 ― 6,
**dadurch gekennzeichnet,**
**dass** die pulsweitenmodulierten Spannungen an den Gleichstrommotoren (1, 2) in Abhängigkeit von einem Positionssollwert und den gefilterten Stromsensorsignalen so moduliert werden, dass die RWA-und Lüftungsklappenantriebe in die Sollposition gefahren werden.

9. Verfahren nach einem der vorangehenden Ansprüche,
**dadurch gekennzeichnet,**
**dass** die pulsweitenmodulierten Spannungen an den Gleichstrommotoren (1, 2) in Abhängigkeit von einem Stellgeschwindigkeitssollwert und den gefilterten Stromsignalen als Stellgeschwindigkeitsistwert so moduliert werden, dass die RWA- und Lüftungsklappenantriebe mit dem Stellgeschwindigkeitssollwert verstellt werden.

10. Synchronisationseinrichtung zur Synchronregelung von mindestens zwei RWA- und Lüftungsklappenantrieben mit je einem mechanisch kommutierten Gleichstrommotor (1, 2), mit einem Synchronisationsregler (23), der geeignet ist, jeden der Gleichstrommotore (1, 2) mit je einer pulsweitenmodulierten Spannung zu beaufschlagen,
wobei jeweils ein Stromsensor (2, 8) einem Kommutatorstromkreis je eines der Gleichstrommotore (1, 2) zugeordnet ist, mit dem eine durch Kommutierung verursachte Welligkeit des Kommutatorstroms erfasst wird,
wobei der Stromsensor (7, 8) über eine Filteranordnung (9, 10) mit je einem Istwerteingang (21, 22) des Synchronisationsreglers (23) in Verbindung steht,
wobei die Filteranordnung (9, 10) mindestens einen Tiefpass (12, 16) in einem Signalübertragungsweg zwischen dem Stromsensor (7, 8) und dem Istwerteingang umfasst, mit dem eine Pulsweitenmodulationsfrequenz des Synchronisationsreglers, die höher als die maximale zu erfassende Welligkeit eingestellt ist, und die harmonischen Oberwellen der Pulsweitenmodulationsfrequenz ausgefiltert werden, so dass der Istwerteingang mit einem gefilterten Stromsensorsignal beaufschlagt wird, das im Wesentlichen nur eine durch Kommutierung verursachte Welligkeit des Kommutatorstroms, die einem Drehwinkel bzw. einer Drehgeschwindigkeit des Gleichstromotors entspricht, beinhaltet.

11. Synchronisationseinrichtung nach Anspruch 10,
**dadurch gekennzeichnet,**
**dass** jeweils zwischen der Filteranordnung und dem Istwerteingang (21, 22) des Synchronisationsreglers (23) ein Komparator angeordnet ist, der ein aus einem von dem Stromsensor (7, 8) über die Filteranordnung (9, 10) abgegebenes gefiltertes Stromsensorsignal in ein Rechteckimpulssignal umsetzt, das dem Drehwinkel bzw. der Drehgeschwindigkeit des Gleichstrommotors (1, 2) entspricht.

12. Synchronisationseinrichtung nach Anspruch 10 ode 11,
**dadurch gekennzeichnet,**
**dass** dem Tiefpass (12, 16) in der Filteranordnung (9, 10) jeweils ein Hochpass (11, 15) vorgeschaltet ist, mit dem ein Gleichstromanteil aus dem Stromsensorsignal von dem Stromsensor (7, 8) ausgefiltert wird.

13. Synchronisationseinrichtung nach Anspruch 11 oder 12,
**dadurch gekennzeichnet,**
**dass** durch einen zusätzlichen Hochpass (13, 17), welcher dem Tiefpass (12, 16) in der Filteranordnung (9, 10) nachgeschaltet ist, ein Frequenzanteil insbesondere von 100 Hz, der auf Gleichrichtung eines Steuersignals (Sollwertsignals) des Synchronisationsreglers oder in einer Stromversorgung der Synchronisationseinrichtung zurückgeht, ausgefiltert wird.

14. Synchronisationseinrichtung nach einem der Ansprüche 10 ― 13,
**dadurch gekennzeichnet,**
**dass** ein zusätzlicher Tiefpass (14, 18), der dem zusätzlichen Hochpass in der Filteranordnung (9, 10) nachgeschaltet ist, so dimensioniert ist, dass der Anteil des erfassten Stromsensorsignals, der durch Kommutierung verursacht ist, in einem Bereich zwischen 300 Hz und 1000 Hz relativ ungedämpft übertragen wird.

15. Synchronisationseinrichtung nach einem der Ansprüche 10 ― 14,
**dadurch gekennzeichnet,**
**dass** der Tiefpass (12, 16), mit dem die Pulsweitenmodulationsfrequenz ausgefiltert wird, der zusätzliche Tiefpass (14, 18), mit dem der Anteil des Stromsensorsignals, der durch Kommutierung verursacht ist, relativ ungedämpft bzw. erhöht wird, und der zusätzliche Hochpass (13, 17), mit dem ein Frequenzanteil von 100 Hz ausgefiltert wird, aktiv, d.h. verstärkend ausgebildet sind.

16. Synchronisationseinrichtung nach einem der Ansprüche 10 ― 15,
**dadurch gekennzeichnet,**
**dass** der Hochpass (11, 15), mit dem der Gleichstromanteil aus dem Stromsensorsignal ausgefiltert wird, ein passiver Hochpass ist.

17. Synchronisationseinrichtung nach einem der Ansprüche 10 ― 16,
**dadurch gekennzeichnet,**
**dass** der Synchronisationsregler (23) auf einen Hubbegrenzungswert und/oder Positionssollwert der RWA- und Lüftungsklappenantriebe einstellbar ist.

18. Synchronisationseinrichtung nach einem der Ansprüche 10 ― 17,
**dadurch gekennzeichnet,**
**dass** der Synchronisationsregler (23) einen Stellgeschwindigkeitsregler umfasst.

19. Synchronisationseinrichtung nach einem der Ansprüche 10 ― 18,
**dadurch gekennzeichnet,**
**dass** der Synchronisationsregler einen Mikrokontroller (23) mit einer Auswerteschaltung umfasst, in der die in dem Mikrokontroller zahlenmäßig erfassten Positionen der RWA- und Lüftungsklappenantriebe ausgewertet werden.

20. Synchronisationseinrichtung nach Anspruch 19 in Verbindung mit einem der Ansprüche 11 ― 18,
**dadurch gekennzeichnet,**
**dass** jeweils ein Eingang (21, 22) des Mikrokontrollers (23) mit einem Ausgang des Komparators (19, 20) verbunden ist und aus diesem mit dem Rechteckimpulssignal beaufschlagt wird, welches in dem Mikrokontroller (23) zur Erfassung des Drehwinkels oder der Drehgeschwindigkeit der Gleichstrommotore (1, 2) ausgewertet, insbesondere gezählt wird.
